Europäisches Patentamt

European Patent Office

Office européen des brevets

(11) Publication number: **0 140 986**
**B1**

(12) **EUROPEAN PATENT SPECIFICATION**

(45) Date of publication of patent specification: **12.09.90**

(51) Int. Cl.⁵: **B 29 B 15/02, B 30 B 9/12**

(21) Application number: **83110455.9**

(22) Date of filing: **20.10.83**

(54) Apparatus and method for extracting fluid from an extruded material.

(43) Date of publication of application:
**15.05.85 Bulletin 85/20**

(45) Publication of the grant of the patent:
**12.09.90 Bulletin 90/37**

(84) Designated Contracting States:
**DE FR GB NL**

(56) References cited:
**EP-A-0 006 803
CH-A-579 895
DE-A-1 502 229
DE-A-1 579 106
US-A-2 458 068
US-A-2 833 750
US-A-3 235 640
US-A-3 499 187
US-A-3 633 880
US-A-3 742 093
US-A-3 874 090**

(73) Proprietor: **Welding Engineers, Inc.
303 East Church Road
King of Prussia Pennsylvania 19406 (US)**

(72) Inventor: **Rossiter, Paul H.
110 Providence Forge Road
Royersford Pennsylvania 19468 (US)**

(74) Representative: **Weber, Dieter, Dr. et al
Dr. Dieter Weber und Dipl.-Phys. Klaus Seiffert
Patentanwälte Gustav-Freytag-Strasse 25
Postfach 6145
D-6200 Wiesbaden 1 (DE)**

Courier Press, Leamington Spa, England.

## Description

The present invention relates to an apparatus and method for extracting a fluid from an elastomer, and more specifically relates to such an apparatus and method for extracting water from an elastomer such as a rubber.

From DE—A—1 502 229 an apparatus for extruding a liquid from an elastomer is known comprising:

a) a twin screw conveying means,

b) a housing including a chamber of substantially Fig. 8-cross-sectional shape, each of said twin screws having worm flights and shaft and being arranged basically concentrical to the corresponding part of said chamber, and

c) a plurality of grooves extending longitudinally along the inside of said housing,

d) said screw shafts having a plurality of shaft areas, each shaft area being located between two consecutive threads.

Such extrusion screws are well-known in the extrusion arts and are known to be effective for working and mixing thermoplastic materials before being extruded through a die plate.

However, the screws of the known twin screw extruder are overlapping in a manner that the threads of each of said screws are engaging the space of the worm flight of neighbouring screw. Moreover, by the known device the elastomer or rubber is subjected to a substantially constant pressure along the length of the screws.

Furthermore extrusion screws, having shaft with shaft areas between consecutive conveying threads, each shaft area being individually sloped towards the axis of the screw shaft in the direction of the forward movement of the thermoplastic material, are known in the art and such a system is described in U.S. Patent No. 3 499 187 to Cohen. This patent discloses that such a conveying screw shaft, having sections of larger diameter and sections of smaller diameter provides better working and mixing of the thermoplastic material enabling it to be conveyed in a pasty and homogeneous state towards the die plate.

The method for extracting a liquid from an elastomer according to DE—A—1 502 229 comprises:

a) a screw conveying the elastomer in a Fig. 8-shaped chamber in a revolving and forward direction,

b) conveying released fluid away from the compressed elastomer,

c) impeding the revolving movement of the elastomer.

In view of the state of art as discussed above, it is the object of the present invention to provide an energy efficient apparatus and method of drying rubbers and other elastomers having a high water content, for example 65 wt. % water, to water contents of less than about 10 wt. %.

This object is achieved for an apparatus comprising the features according to the preamble of claim 1, which apparatus is characterized in that

e) inbetween said screws an apex area is provided in order to define a region of reduced compression, and

f) said shaft areas, at least in the mean part of said screws, being sloped toward the axis of the screw shafts in the forward conveying direction.

As regards the method according to the preamble of claim 3, the object of the invention is achieved by a method which is characterized by

d) alternately:

i) wedging and compressing the elastomer between a forward face of a screw conveying thread, a screw shaft and a chamber wall, and

ii) releasing the wedged and compressed elastomer in a region of reduced compression.

The apparatus for extracting liquid from an elastomer involves a twin screw extruder configuration wherein the elastomer is alternately compressed in the space between the wedge shaped screw shaft, the extruder barrel wall and the forward side of the conveying screw threads, and released from its state of compression by depositing it in an apex area between the two screws. After being deposited in the apex area, the elastomer is then picked up by the second screw and undergoes compression. In this way, the elastomer is worked by alternately compressing and releasing the elastomer particles.

In a preferred embodiment of the present invention the step of impeding the revolving movement of the elastomer particles as they are conveyed by the rotating screw is accomplished by providing longitudinal grooves running along the length of the extruder barrel wall. The cross-section of the chamber will be roughly in the shape of a Figure 8. The longitudinal grooves are provided along the walls of the Figure 8.

Figure 1 is a side sectional view of a fluid extracting apparatus comprising one specific embodiment of the present invention.

Figure 2 is a top view of a fluid extraction apparatus similar to the one shown in Figure 1, with a second screw illustrating the twin screw embodiment.

Figure 3 is a sectional view toward the inlet end of the fluid extraction apparatus shown in Figure 2 taken along III—III.

Although specific forms of apparatus embodying the invention have been selected for illustration in the drawings, and although specific method steps embodying the invention have been selected for description and although specific terminology will be resorted to in describing those forms in the specification which follows, their use is not intended to define or to limit the scope of the invention, which is defined in the appended claims.

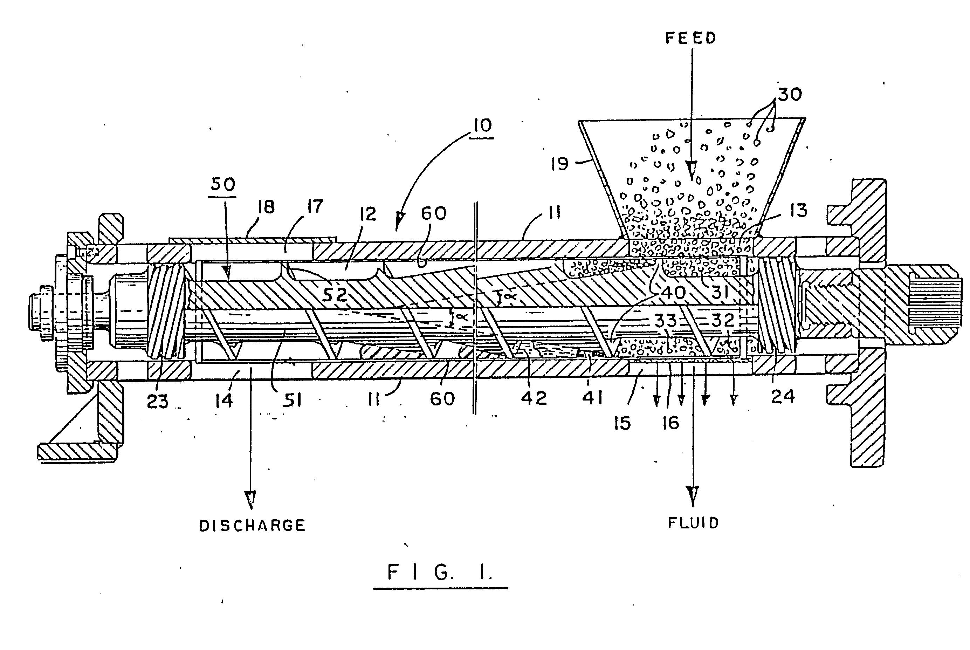

Referring generally to the figures, the liquid extraction apparatus is generally referred to as 10. Referring specifically to Figure 1, liquid extraction apparatus 10 comprises housing 11 enclosing a chamber 12. Housing 11 has an inlet port 13 to which is attached a hopper 19 through which the incoming rubber particles 30 are fed. Located below inlet port 13 at the inlet end of the fluid extraction apparatus 10 is a drain opening 15 having a screen 16 disposed therein. Thus, any free water which is fed into the liquid extraction apparatus 10 is immediately drained off through screen 16 and drain opening 15. Housing 11 also has an inspection port 17 with a transparent covering 18 thereover, and a discharge port 14 through which the dried rubber and extracted free water are discharged from the liquid extraction apparatus 10. Rotatably mounted within chamber 12 is screw 50 comprising a screw shaft 51 and threading 52. Screw 50 forms a seal with the ends of housing 11 using conventional sealing means 23, 24.

Rotating screw 50 is driven by conventional means (not shown). With the apparatus shown it is possible to utilize an efficient high speed pump yielding higher capacities with small machines. The pump speed controls are important and should be infinitely variable in order to match screw rotational speed with the geometry of the screw spacings and the type of apparatus used.

In the operation of liquid extraction apparatus 10, rubber particles 30, having a water content of about 65 wt. %, are fed into hopper 19 and begin to fill up the spaces 31, 32 and 33 between screw 50 and the inside wall of housing 11. The screw shaft 51 has a substantially uniform and reduced diameter adjacent spaces 31, 32 and 33. Thus, as the rubber particles 30 are conveyed along this section of screw 50 there is little compression of the rubber particles 30.

Downstream of thread 40 however, the shape of shaft 51 changes. As can be seen in Figure 1, the angled surface of shaft 51 together with threads 40 and the inside wall of housing 11 form a wedge shape into which the rubber particles 30 are compressed as they are conveyed through liquid extraction apparatus 10.

The outer surface of shaft 51 typically forms an angle $\alpha$ in the forward conveying direction with the axis of screw 50. Angle $\alpha$ is typically in the range from about 5° to about 15°. In the case of dewatering rubber particles, $\alpha$ is preferably about 10°.

As the rubber particles 30 are conveyed downstream from thread 40 they are wedged and compressed into space 41 thereby squeezing out the liquid held by the rubber particles 30. This extracted liquid then runs into adjacent space 42.

Grooves 60 are provided in the inside wall of housing 11 and run longitudinally along the length of housing 11. Grooves 60 present a "washboard" surface over which the rubber particles 30 are conveyed. Such a grooved surface aids in the compression of the rubber particles 30 to extract even more liquid therefrom.

As screw 50 rotates, the rubber particles 30 are transported along the length of the fluid extraction apparatus 10 in a compressed manner and separate from the extracted liquid.

As the material is conveyed to the discharge end of the fluid extraction apparatus 10, the diameter of shaft 51 again becomes uniform and reduced in size and the rubber particles 30 together with the free extracted water are discharged through port 14. The extracted water and the compressed rubber are typically discharged onto a shaker screen from which the free water is removed. In the operation of the above-described apparatus, the rubber leaving the discharge port 14 typically has a water content of up to about 10 wt. %.

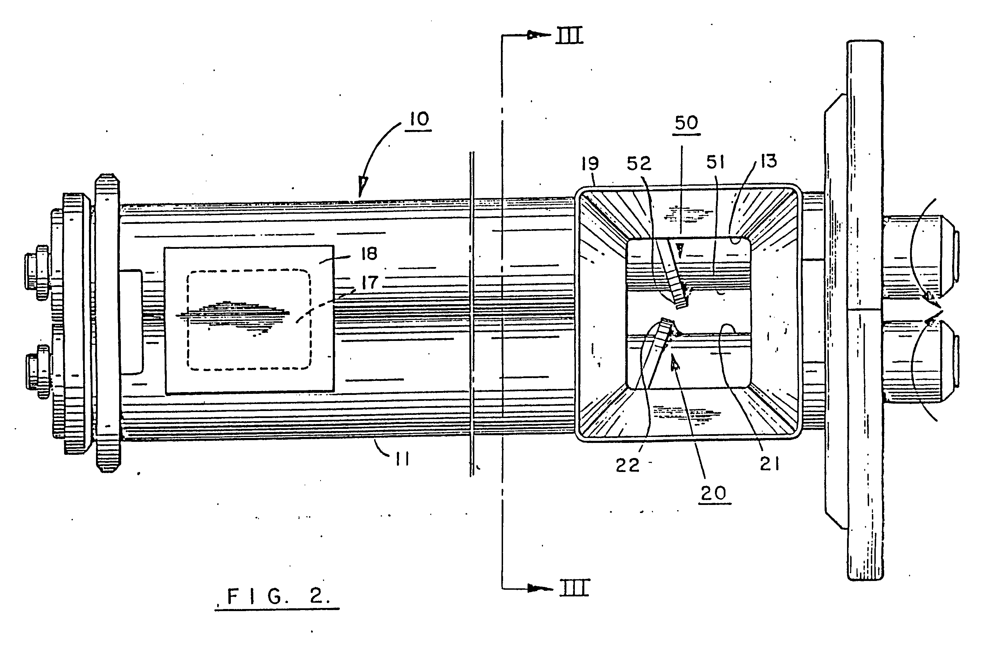

Referring now to Figure 2, one can see that the liquid extraction apparatus 10 has a twin screw design. Inlet port 13 reveals the two screws 20, 50 in parallel alignment, each screw having a shaft 21, 51 and threading 22, 52 respectively. Threading 22 and 52 are of opposite hand.

Also shown in Figure 2 is the inspection port 17 with transparent covering 18 enabling an operator to view the discharge of the rubber particles 30.

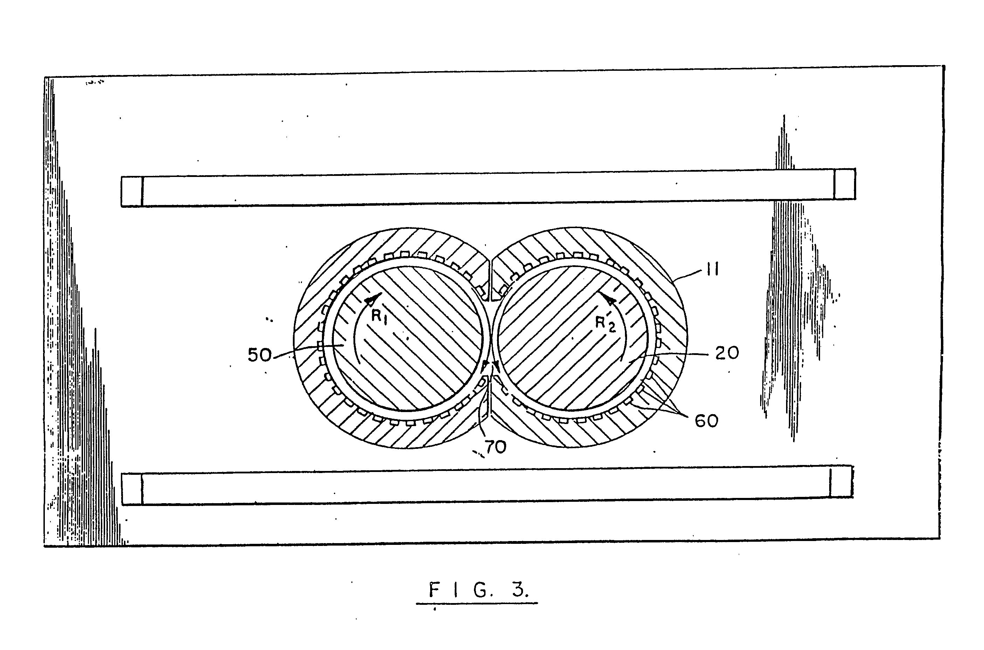

Figure 3 is a cross-sectional view of the apparatus shown in Figures 1 and 2, taken along line III—III in Figure 2, looking toward the inlet end of liquid extraction apparatus 10. As can be seen, housing 11 has a Figure 8-shaped cross-section to accommodate the two screws 20, 50.

As can be seen from arrows $R_1$ and $R_2$, screw 20 rotates in a counter-clockwise direction while screw 50 rotates in a clockwise direction.

Grooves 60 are clearly shown in the interior walls of housing 11. Grooves 60 run longitudinally along the length of housing 11 and provide a type of washboard effect for impeding the conveyance of the rubber particles 30 through the housing 11. Grooves 60 together with the screw conveying action of screws 20, 50 provides increased compression of the rubber particles 30 and helps extract even more liquid therefrom.

Between screws 20, 50 is an apex area 70 into which the compressed rubber particles 30 are periodically deposited during the rotation of screws 20, 50. Apex area 70 provides a region of reduced compression compared with the wedging and compressing action of the screws 20, 50 during the remaining portion of their rotations. Thus, the rubber particles 30 are subjected to alternating compression and release, with the release being provided during the residence time of the particles 30 in apex area 70. Eventually, the particles 30 are picked up by the screw threads and removed from apex area 70 as shown by the arrows and fed into the wedged and compressing narrow gaps between the screws 20, 50 and the inside wall of housing 11 having longitudinal grooves 60.

Although this invention has been described in connection with specific forms thereof, it will be appreciated by those skilled in the art that a wide variety of equivalents may be substituted for those specific elements and steps of operation shown and described herein, that certain features may be used independently of other features, and that parts may be reversed, all without departing from the scope of this invention as defined in the appended claims.

## Claims

1. Apparatus for extruding a liquid from an elastomer comprising

a) a twin screw conveying means (20, 50),

b) a housing (11) including a chamber (12) of substantially Figure 8-cross-sectional shape, each of said twin screws (20, 50) having worm flights (40) and shaft (21, 51) being arranged basically concentrical to the corresponding part of said chamber (12),

c) a plurality of grooves (60) extending longitudinally along the inside of said housing (11),

d) said screw shafts (21, 51) having a plurality of shaft areas, each shaft being located between two consecutive threads (22, 52), characterized in that

e) inbetween said screws (20, 50) an apex area (70) is provided in order to define a region of reduced compression, and

f) said shaft areas, at least in the mean part of said screws (20, 50) being sloped toward the axis of the screw shafts (21, 51) in the forward conveying direction.

2. The apparatus as described in claim 1, characterized in that the outer surfaces of said shaft areas are inclined toward the forward conveying direction to the center of the axis of the screw (50) by an angle in the range of 5° to about 15°.

3. A method for extracting a liquid from an elastomer comprising

a) screw conveying the elastomer in a Figure 8-shaped chamber in a revolving and forward direction,

b) conveying released fluid away from the compressed elastomer,

c) impeding the revolving movement of the elastomer, characterized by

d) alternately

i) wedging and compressing the elastomer between a forward face of a screw conveying thread, a screw shaft and a chamber wall, and

ii) releasing the wedged and compressed elastomer in a region of reduced compression.

4. The method as described in claim 3, characterized in that said elastomer is a rubber.

5. The method as described in claims 3 or 4, characterized in that said fluid is water.

## Patentansprüche

1. Vorrichtung zum Herauspressen einer Flüssigkeit aus einem Elastomeren mit

a) einer Zwillingsschrauben-Fördereinrichtung (20, 50),

b) einem Gehäuse (11) mit einer Kammer (12), welche im wesentlichen einen Querschnitt in Form einer 8 hat, wobei jede der Zwillingsschrauben (20, 50) Schneckengänge (40) und einen Schaft (21, 51) hat, welcher im wesentlichen konzentrisch zu dem entsprechenden Teil der Kammer (12) angeordnet ist,

c) einer Mehrzahl von Nuten (60), welche sich in Längsrichtung auf der Innenseite des Gehäuses (11) erstrecken,

d) wobei die Schraubenschäfte (21, 51) eine Mehrzahl von Schaftbereichen haben und wobei jeder Schaftbereich zwischen zwei aufeinanderfolgenden Gewindegängen (22, 52) angeordnet ist, dadurch gekennzeichnet, daß

e) zwischen den Schrauben (20, 50) ein Scheitelbereich (70) vorgesehen ist, um einen Bereich mit verringertem Preßdruck zu definieren, und

f) die Schaftbereiche, zumindest im mittleren Teil der Schrauben (20, 50) in Richtung auf die Achse der Schraubenschäfte (21, 51) in Vorwärtsförderrichtung geneigt sind.

2. Vorrichtung nach Anspruch 1, dadurch gekennzeichnet, daß die äußeren Oberflächen der Schaftbereiche in Vorwärtsförderrichtung zum Zentrum der Achse der Schraube (50) hin um einen Winkel im Bereich von 5° bis etwa 15° geneigt sind.

3. Verfahren zum Herausziehen einer Flüssigkeit aus einem Elastomeren mit:

a) Schneckenfördern des Elastomeren in einer Kammer in Form einer 8 in einer Umwälz- und Vorwärtsrichtung,

b) Wegtransportieren des freigegebenen Fluids von dem zusammengepreßten Elastomeren,

c) Behindern der Umwälzbewegung des Elastomeren, gekennzeichnet durch

d) abwechselnd

i) Verkeilen und Zusammenpressen des Elastomeren zwischen einer Vorderfläche eines Schraubentransportganges, eines Schraubenschaftes und einer Kammerwand, und

ii) Freigeben des verkeilten und zusammengepreßten Elastomeren in einem Bereich mit verringertem Preßdruck.

4. Verfahren nach Anspruch 3, dadurch gekennzeichnet, daß das Elastomer ein Gummi ist.

5. Verfahren nach Anspruch 3 oder 4, dadurch gekennzeichnet, daß das Fluid Wasser ist.

## Revendications

1. Appareil pour l'extraction d'un liquide d'un élastomère comportant:

a) un moyen de transport à vis jumelles (20, 50),

b) un boîtier (11) comportant une chambre (12) ayant sensiblement la forme d'un 8 en coupe, chacune desdites deux vis (20, 50) comportant des ailettes en spirale (40) et un arbre (21, 51) étant disposé fondamentalement concentriquement par rapport à la partie correspondante de ladite chambre (12),

c) un ensemble de rainures (60) s'étendant longitudinalement le long de l'intérieur dudit boîtier (11),

d) lesdits arbres à vis (21, 51) comportant un ensemble de zones d'arbre, chaque zone d'arbre étant disposée entre deux filets consécutifs (22, 52), caractérisé en ce que

e) entre lesdites vis (20, 50), est prévue une zone formant sommet de triangle (70) pour définir une région de compression réduite, et

f) lesdites zones d'arbre, au moins dans la partie médiane desdites vis (20, 50), est inclinée en pente vers l'axe des arbres de vis (21, 51) dans le sens d'avancement du transport.

2. Appareil tel que décrit dans la revendication 1, caractérisé en ce que les surfaces externes desdites zones d'arbre sont inclinées vers le sens de progression vers l'avant au centre de l'axe de la vis (50) d'un angle qui se trouve compris entre 5° et environ 15°.

3. Procédé pour l'extraction d'un liquide d'un élastomère comportant:

a) le transport au moyen d'une vis de l'élastomère dans une chambre ayant la forme du chiffre 8 dans un sens de rotation et vers l'avant,

b) le transport du fluide libéré hors de l'élastomère comprimé,

c) le fait d'empêcher le mouvement de rotation de l'élastomère, caractérisé par le fait que:

d) alternativement

i) on coince et on comprime l'élastomère entre une face avant d'un filet de transport de la vis, un arbre de vis et une paroi de chambre, et

ii) on libère l'élastomère coincé et comprimé dans une région de compression réduite.

4. Procédé tel que décrit à la revendication 3 caractérisé en ce que ledit élastomère est un caoutchouc.

5. Procédé tel que décrit dans l'une des revendications 3 ou 4 caractérisé en ce que ledit fluide est de l'eau.

FEED

DISCHARGE

FLUID

F I G.  I.

EP 0 140 986 B1

F I G. 2.

F I G. 3.